# EUROPEAN PATENT SPECIFICATION

(11) **EP 1 442 554 B1**
(45) Date of publication and mention of the grant of the patent: **30.05.2012**
(21) Application number: 02775099.1
(22) Date of filing: 17.10.2002
(51) Int. Cl.: H04L 9/00, H04K 1/00

(54) **A method, system and computer program product for integrity-protected storage in a personal communication device**
Verfahren, System und Computerprogrammprodukt zur integritätsgeschützten Speicherung in einer persönlichen Kommunikationseinrichtung
Procédé, système et programme informatique pour stockage à protection d'integrité dans un dispositif de communications personnelles

(30) Priority: 18.10.2001 US 978701; 16.01.2002 US 46274
(43) Date of publication of application: 04.08.2004
(73) Proprietor: Nokia Corporation, 02150 Espoo (FI)
(72) Inventor: ASOKAN, Nadarajah, FIN-02320 Espoo (FI); EKBERG, Jan-Erik, FIN-00320 Espoo (FI); PAATERO, Lauri, FIN-00970 Helsinki (FI)
(74) Representative: Derry, Paul Stefan
(86) International application number: PCT/IB2002/004294
(87) International publication number: WO 2003/034650

(56) References cited:
- US-A- 6 018 717
- US-B1- 6 331 972
- COOKE J C ET AL: "The use of smart cards in personal communication systems security" TELECOMMUNICATIONS, 1993. FOURTH IEE CONFERENCE ON (CONF. PUBL. NO. 371) MANCHESTER, UK, LONDON, UK,IEE, UK, 1993, pages 246-251, XP006514390 ISBN: 0-85296-568-0
- MENEZES, OORSCHOT, VANSTONE: "Handbook of Applied Cryptography" CRC PRESS SERIES ON DISCRETE MATHEMATICS AND ITS APPLICATIONS, 1997, pages 397-405, XP002440045 BOCA RATON, FL, US ISBN: 0-8493-8523-7

## Description

### FIELD OF THE INVENTION

A method, system and computer program product for achieving integrity-protected storage in a personal communication device by implementing a digital rights management (DRM) scheme on a personal communication device. In particular, the method, system and computer program product combines cryptography and with an external tamper-resistant storage to securely protect critical data from unauthorized use or modification.

### BACKGROUND OF THE INVENTION

The use of personal communication devices in every aspect of our daily lives has increase dramatically over recent years. With the proliferation of personal communication devices, it has become more and more important to protect the critical data stored within the device. For example, the use of a PIN has been implemented with personal communication devices to control access to the device. However, it is possible that one may guess the PIN if given an unlimited number of time and attempts to enter a PIN. Thus, in addition to the use of a PIN, it is useful to limit the number of attempts to enter a PIN.

In order to limit the number of attempts to access the device, it is necessary to use some type of counter in the personal communication device itself. The counter utilizes "state" information related to the critical data used by the device. Similar counters have been used in the area of digital rights management (DRM) for controlling the consumption of data content. For example, a third party might want to prevent a user of a personal communication device from playing a song more than 10 times. The right to play the song 10 times is delivered as an electronic voucher that specifies a 10-use restriction by implementing a counter. However, if a user can reset the counter after each use, the song can be played indefinitely without having to pay the owner of the data for each use. Thus, in the area of DRM various methods of cryptography have been used to protect the critical state information.

Digital Rights Management (DRM) is a technology providing mechanisms for controlling consumption of digital content. DRM is already being used to some extent in the wireline Internet domain, but there is currently no widespread DRM system that is used in the mobile domain, such as for personal digital assistants (PDAs) or mobile telephones.

One of the attractive features of DRM is superdistribution, that is, the ability of a data content owner to forward data content to a user and be able to get paid each time the data is used. However, in order to accomplish this, security-critical applications in a personal communication device must be able to store "state" information related to the data sent. For example, a user of a personal communication device might buy the right to play a song 10 times on a personal communication device from the owner of the data. The rights are delivered as an electronic voucher that specifies a 10-use restriction, presumably by a counter. However, if the user can reset the counter after each use, the song can be played indefinitely without having to pay the owner of the data for each use.

Cryptography is one practical technology that can be used to control the consumption of such critical data. Cryptography involves the encoding or encrypting of digital data to render them incomprehensible by all but the intended recipients. In other words, the data is encrypted and the decryption key is delivered to those terminals or users that have paid to consume the data content. To this end, cryptographic systems can be used to preserve the privacy and integrity of the data by preventing the use and alteration of data by unauthorized parties. In addition to encryption, cryptography can also be used to authenticate the origin of data to make sure that e.g., only a party who has the right key can generate the right signature or message authentication code (MAC).

For example, a plaintext message consisting of digitized sounds, letters and/or numbers can be encoded numerically and then encrypted using a complex mathematical algorithm that transforms the encoded message based on a given set of numbers or digits, also known as a cipher key. The cipher key is a sequence of data bits that may either be randomly chosen or have special mathematical properties, depending on the algorithm or cryptosystem used. Sophisticated cryptographic algorithms implemented on computers can transform and manipulate numbers that are hundreds or thousands of bits in length and can resist any known method of unauthorized decryption. There are two basic classes of cryptographic algorithms: symmetric key algorithms and asymmetric key algorithms.

Symmetric key algorithms use an identical cipher key for both encrypting by the sender of the communication and decrypting by the receiver of the communication. Symmetric key cryptosystems are built on the mutual trust of the two parties sharing the cipher key to use the cryptosystem to protect against distrusted third parties. A well-known symmetric key algorithm is the National Data Encryption Standard (DES) algorithm first published by the National Institute of Standards and Technology. See Federal Register, Mar. 17, 1975, Vol. 40, No. 52 and Aug. 1, 1975, Vol. 40, No. 149. The sending cryptographic device uses the DES algorithm to encrypt the message when loaded with the cipher key (a DES cipher key is 56 bits long) for that session of communication (the session key). The recipient cryptographic device uses an inverse of the DES algorithm to decrypt the encrypted message when loaded with the same cipher key as was used for encryption.

Asymmetric key algorithms use different cipher keys for encrypting and decrypting. In a cryptosystem using an asymmetric key algorithm, the user makes the encryption key public and keeps the decryption key private, and it is not feasible to derive the private decryption key from the public encryption key. Thus, anyone who knows the public key of a particular user could encrypt a message to that user, whereas only the user who is the owner of the private key corresponding to that public key could decrypt the message. This public/private key system was first proposed in Diffie and Hellman, "New Directions in Cryptography," IEEE Transactions on Information Theory, Nov. 1976, and in U.S. Pat. No. 4,200,770 (Hellman et al.), both of which are hereby incorporated by reference.

Crytographic systems, as noted above, can be used in smaller personal communication devices. In such devices, it has been possible to store "state" information in an insecure external storage in a couple of ways. First, by writing a snapshot to the state information and computing its "checksum," e.g., by using a one-way hash function. The result is stored within a tamper-resistant memory location of the device. Therefore, if someone changes the contents of the external storage, the checksum of the result will not match the checksum value stored within the personal device. Second, using a monotonic, persistent counter within the device. Every time there is a state change, the state information is stored along with the current counter value encrypted using a device key. Thus, no one can change the encrypted state information without the key.

However, both of these prior art methods require a small amount of read-write, tamper-resistant storage within the device itself. This might not always be feasible because of the expense of read-write storage.

COOKE J C ET AL: "The use of smart cards in personal communication systems security", TELECOMMUNICATIONS, 1993. FOURTH IEE CONFERENCE ON (CONF. PUBL. NO. 371) MANCHESTER, UK, LONDON, UK,IEE, UK, 1993, pages 246-251, XP006514390, ISBN: 0-85296-568-0, discloses a system and method for the creation and use of a secure data item, comprising a first tamper-proof storage device in a personal communication device (such as a mobile terminal), a second "external" tamper-proof storage device (such as a secure section of the memory of a smart card, connected to the personal communication device), and a processor disposed in communication with the storage devices and capable of authenticating the external storage devices and transfer data securely among them (i.e. both in a confidential and authenticated manner).

Therefore, it is desirable to provide a system, method and computer program product that provides improved integrity-protected storage for a personal communication device using a read-write, external tamper-resistant storage device. The system, method and computer program product of the present invention disclosed herein address this need.

### SUMMARY OF THE INVENTION

The invention is defined by the claims.

This specification describes a method, system and computer program product for achieving integrity- protected data storage of critical data in a personal communication device using cryptography.

The described method, system and computer program product uses an external, tamper-resistant storage device that stores important state information that cannot be modified without detection. The integrity of data storage in a personal communication can be assured even if data is stored in an insecure storage device.

It is contemplated that the method, system and computer program product can implement a trusted counter for protecting access to the personal communication device.

It is contemplated that an external, tamper-resistant storage device provides a monotonically increasing, authenticated counter value to another storage device within the personal communication device.

It is contemplated that the integrity-protected communication is achieved using at least three basic protocols: 1) create, 2) read and 3) write between the external read-write storage device and the secure module of the personal communication device.

It is contemplated that communication for implementing a trusted counter is achieved using at least three basic communication protocols: 1) create, 2) read and 3) update.

It is also contemplated that the tamper-resistant, read-only storage device stores various secret keys.

It is also contemplated that the external, tamper-resistant storage is a read-write storage device that stores an encryption key pair and a compliance certificate issued by the manufacturer of the device.

It is also contemplated that an additional insecure storage device can be used in which secret data can be stored by encrypting it with a stored secret key.

### BRIEF DESCRIPTION OF THE DRAWINGS

The accompanying figures best illustrate the details of the method, system and computer program product of the present invention for achieving integrity-protected communication for a personal communication device. Like reference numbers and designations in these figures refer to like elements.
Fig. 1 is a network diagram depicting a personal communication device including two storage devices in accordance with an embodiment of the invention.
Fig. 2 is a network diagram depicting a personal communication device including three storage devices in accordance with an embodiment of the invention.
Fig. 3 is a more detailed diagram of the two tamper-resistant storage devices of the personal communication device in accordance with an embodiment of the invention.
Fig. 4 is a flow diagram depicting the execution of the create protocol in accordance with an embodiment of the invention.
Fig. 5 is a flow diagram depicting the execution of the read protocol in accordance with an embodiment of the invention.
Fig. 6 is a flow diagram depicting the execution of the write protocol in accordance with an embodiment of the invention.
Fig. 7 is a flow diagram depicting the execution of the delete protocol in accordance with an embodiment of the invention.
Fig. 8 is a more detailed diagram of the two tamper-resistant storage devices and the one insecure storage device of the personal communication device in accordance with an embodiment of the invention.
Fig. 9 is a detailed diagram of three storage devices in accordance with an embodiment of the present invention.
Fig. 10 is a flow diagram depicting the execution of the create counter protocol in accordance with an embodiment of the invention.
Fig. 11 is a flow diagram depicting the execution of the read counter protocol in accordance with an embodiment of the invention.
Fig. 12 is a flow diagram depicting the execution of the update counter protocol in accordance with an embodiment of the invention.

### DETAILED DESCRIPTION OF THE INVENTION

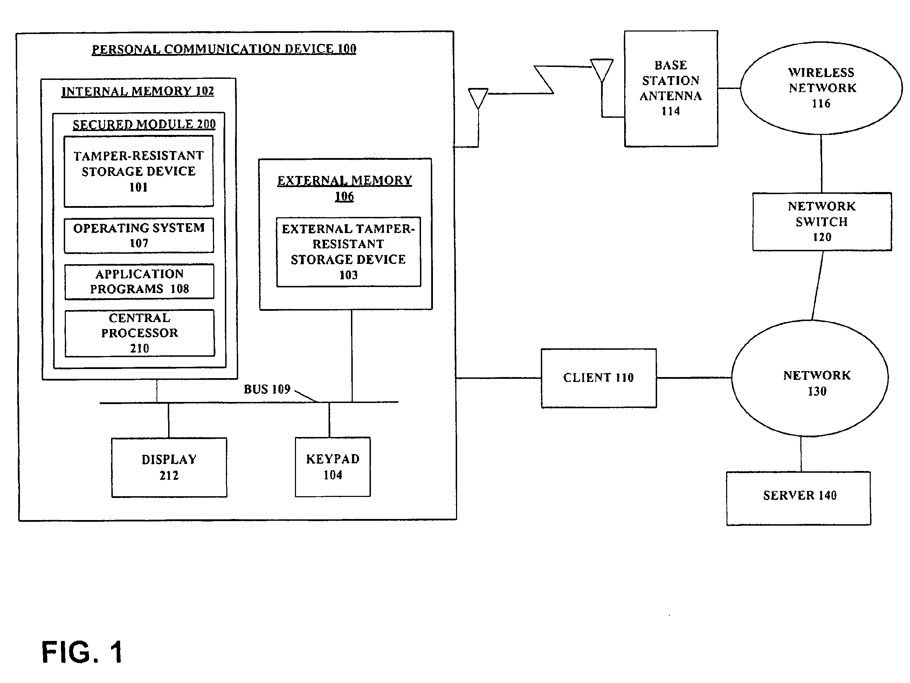

Fig. 1 illustrates an embodiment of the integrity-protected storage system of the present invention incorporated into a wireless, personal communication device **100** such as a wireless telephone, a satellite telephone, a personal digital assistant, or a bluetooth device. The personal communication device **100** includes an internal memory **102** and an external memory **106.** Within the internal memory there is a secured module **200** that provides tamper-resistant storage for several elements and systems of the personal communication device **100.** For example, the secured module **200** provides secured storage for a tamper-resistant storage device **101,** central processor **210,** operating system **107** and application programs **108.** It is assumed in this embodiment of the invention that the personal communication device **100** does not have any read-write storage internal to the device that is tamper-resistant or otherwise. Tamper-resistant is a term known in the art that defines a secure section or memory or storage. A tamper-resistant boundary makes it difficult for an attacker to get at an internal element or data within a secure section. The tamper-resistant storage **101** is a read-only memory that is in communication with an external tamper-resistant storage device **103** of the external memory **106** via the bus **109.** The external, tamper-resistant storage device **103** is a read-write memory device. The external storage device **103** is an electronic card such as smartcard, flashcard or WIM card that is received by the personal communication device **100.**

Communication between the internal memory **102** and the external memory **106** is achieved using various protocol executed by the operating system **107** and the central processor **210.** The application programs **108** are executed by the central processor **210** and comprise operating features that are performed by the personal communication device **100** such as an electronic purse application or other DRM applications. The protocol used for communication between the tamper-resistant storage device **101** and the external tamper-resistant storage device **103** include a create protocol, a read protocol and a write protocol. A user (not shown) can communicate with the personal communication device **100** via the keypad **104** and the display **212.** The personal communication device 100 in Fig. 1, is a wireless communication device that is connectable to a wireless network to received and transmit data. The personal communication device in Fig. 1 is connectable to a wireless network **116** via a transmitted signal such as a frequency-modulated signal from the device **100** and received by a base station antenna **114.** From the wireless network, the personal communication device can be connected to a computer server **140** via a network **130** and a wireless network switch **120.** The network **130** can be a server, Intranet, Internet, public switching network (PSTN), public exchange (PBX) or the like. The client **110** is a server or personal computer that is connectable to the public network **130** via a modem and is used to initialize the personal communication device **100** as well as add and delete application programs **108.**

The typical size requirements for the tamper-resistant storage device **101** is 128-256 bits of read-only memory. The tamper-resistant storage **101** can store device keys that can be used to convert data stored in insecure storage into secret storage. The typical size requirement of the external tamper-resistant storage device **103** is 128-256 bits of read-write memory. This storage **103** can be used to store important "state" information that need not be secret, but should be unmodifable or replayable without detection of such things as the number of uses of data content, number of copies made, copies that were moved or given to some other device. The external, tamper-resistant security element **103** can also be used to store a monotonically increasing, authenticated counter value that can be used to secure the "state" information such as the number of failed attempts to enter a PIN by a user.

The use of a PIN to access the device **100** is implemented in a number of ways that are well known in the art. For example, the PIN is initially set to a default PIN by the manufacturer and later must be changed by the owner of the personal communication device **100** before use. In the alternative, there is no PIN initially and the owner of the device creates a PIN. It is contemplated by the invention that the device **100** also includes a PIN Unblock Code (PUK) that allows the recovery of a PIN if it is lost or forgotten by the rightful owner of the device **100.**

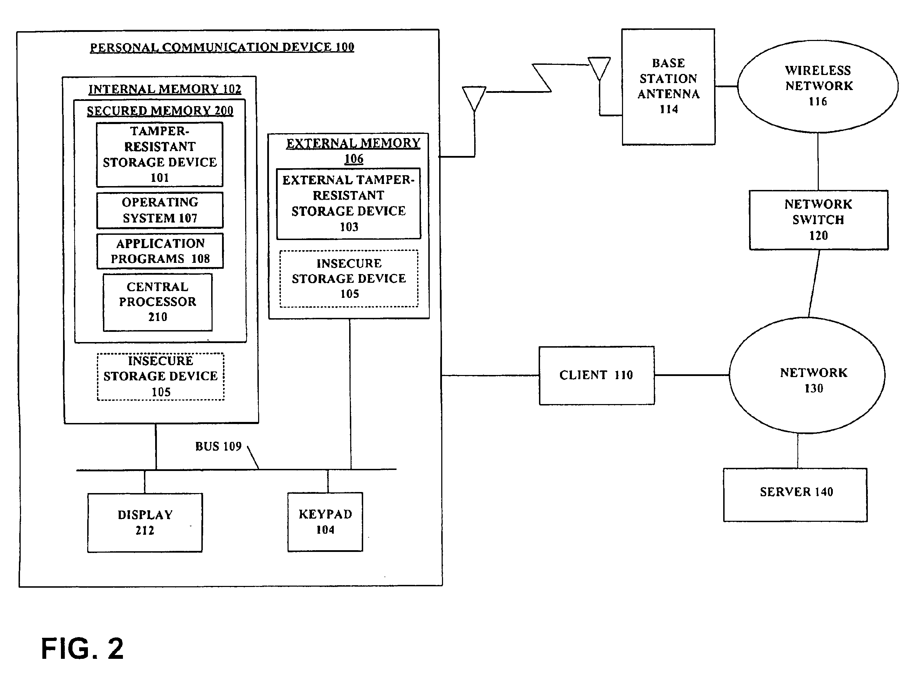

Figure 2 is directed to another embodiment of the invention that illustrates a personal communication device **100** with an additional insecure storage device 105 that can be used as an internal or external storage device. Insecure as described herein means that the storage device is not tamper-resistant, as previously described. If the insecure storage device **105** is used as an internal storage device, it will be hardwired within the internal memory **102** of the personal communication device. If the insecure storage device **105** is used as an external storage device, it will be a removable electronic card such as a smartcard, flashcard, or WIM card. For example, the personal communication device **100** of Fig. 2 includes an internal memory **102** comprising a tamper-resistant storage device **101,** an operating system **107,** application programs **108** and an insecure storage device **105.** The tamper-resistant storage device **101** and insecure storage device **105** are in communication with each other and each with an external tamper-resistant storage device **103** using a protocol executed by the operating system **107** and central processor and via the bus **109.** The tamper-resistant storage device **101,** the insecure storage device **105** and the external tamper resistant storage device **103** of Fig. 2 have the same minimal storage requirements as discussed previously for the tamper-resistant storage device **101** and external tamper-resistant storage device **103** in Fig. 1. In another arrangement, the external memory **106** comprises an external tamper-resistant storage device **103** and the insecure storage device **105.** In this arrangement, the external storage device **103** and the insecure storage device **105** are also in communication with the components **101, 107, 108** of the memory **102** via the bus **109** using a protocol executed by the operating system **107** and the central processor **210.**

The insecure storage device **105** can be used to store secure data (i.e., "state information") by using a suitable cryptographic transform (encryption, authentication or a combination). However, because the insecure storage device **105** is not tamper-resistant, it cannot provide the same level of integrity-protection as the tamper-resistant storage devices **101, 103.** For example, the "state" information stored in the insecure storage device **105** can be related to, for example, the number of failed attempts to enter the correct PIN number. The state information can be encrypted with a secret key **101a** from the tamper-resistant storage device **101.** A corresponding integrity-protection check value such as a checksum or a counter, as described in the prior art, is stored in the external, tamper-resistant storage device **103.** Communication between the tamper-resistant storage device **101,** the external tamper-resistant storage device **103** and the insecure storage device **105** is achieved using a protocol executed the operating system **107** and a central processor **210** of the device **100.** The protocols comprise at a create, read and update protocol. Again, the client **110** is a server or personal computer that is used to initialize the personal communication device **100** and is connectable to the public network **130** using a connection such as a modem connection.

As mentioned previously, a user (not shown) can communicate with the personal communication device **100** using a keypad **104** and display **212.** The personal communication device in Fig. 2 (as in Fig. 1) is connectable to a wireless network **116** via a transmitted signal such as a frequency-modulated signal received from a base station antenna **114.** From the wireless network the personal communication device **100** can be connected to a computer server **140** from a network **130** and a wireless network switch **120.** The network **130** can comprise a server, the Internet, an Intranet, a PSTN, a PBX, or the like.

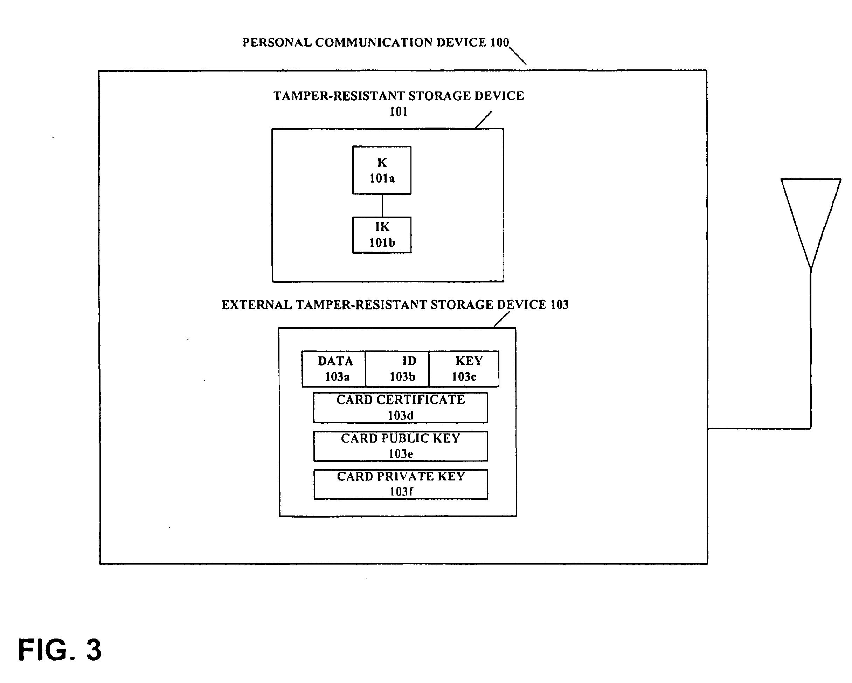

Figure 3 illustrates in more detail the tamper-resistant storage device **101,** and the external tamper-resistant storage device **103** of the personal communication device **100** in accordance with an embodiment of the invention. The tamper-resistant storage device **101** has a secret key **101a** from which an integrity key **101b** can be derived. However, the integrity key **101b** can also be determined independently from the secret key **101a** as well. The personal communication device does not have any read-write storage, tamper-resistant or otherwise. In other words, the personal communication device **100** does not have any hardwired read-write memory. Thus, the only read-write storage would be provided by the external tamper-resistant storage device **103.** The external tamper-resistant storage device **103** is an electronic card such as a smartcard, flashcard or WIM card having read-write storage. The external tamper-resistant storage device **103** has an encryption key pair that consists of a device public key **103e** and a device private key **103f.** Additionally, the external tamper-resistant storage device **103** includes a device certificate **103d** or compliance certificate that is used to prove that the external tamper-resistant storage device **103** was manufactured by a trusted third party. The external tamper-resistant storage device **103** has a memory location for storing data **103a,** a device identification **103b** and a secret key **103c.** In this embodiment, the device identification **103b** and key **103c** are the device identity and integrity key **101b** supplied by the tamper-resistant storage device **101.** The integrity key is used for authenticating a request to read, write or update the data **103a** stored in the external tamper-resistant storage device **103.** Additionally, the card certificate **103d** stored in the external tamper-resistant storage device **103** is used by the storage tamper-resistant storage device **101** to assure that the external tamper-resistant storage device **103** is manufactured by a trusted third party.

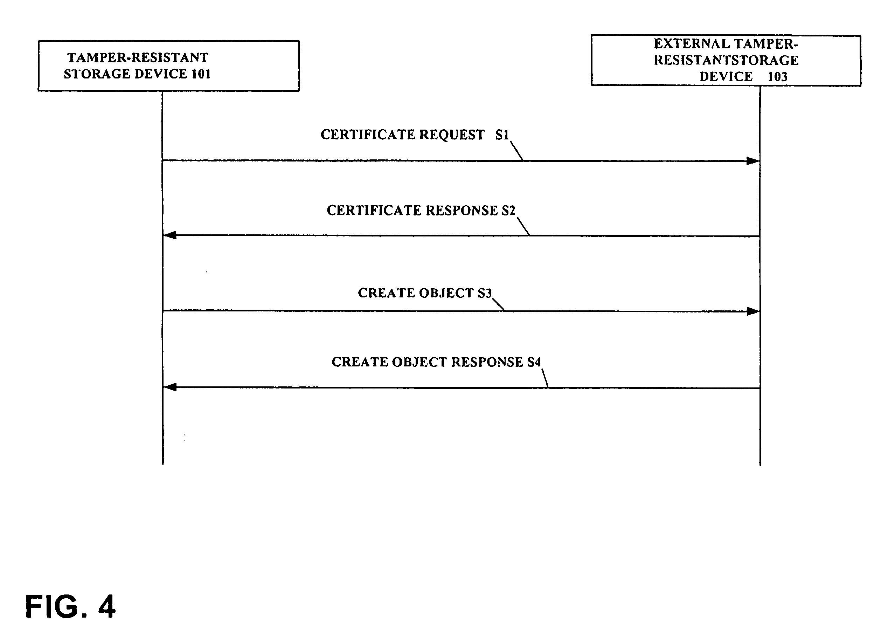

Fig. 4-6 illustrates the steps for achieving integrity-protected storage in the personal communication device **100** through communication between the external tamper-resistant storage device **103** and the tamper-resistant storage device **101** illustrated in Fig. 3.

Fig. 4 illustrates the steps involved for executing the create protocol that is used for creating an object for achieving integrity-protected storage in personal communication device **100.** Initially, in step **S1** tamper-resistant storage device **101** requests the card certificate **103a** stored in the external tamper-resistant storage device **103.** In step **S2** the tamper-resistant storage device **101** receives the card certificate **103d** and verifies that it is a compliant card using a certificate chain. Typically, two certificates can be used in order for the tamper-resistant storage device **101** to verify that the external tamper-resistant storage device **103** possesses a compliant card certificate **103d.** For example, a certificate issued by the manufacturer of the tamper-resistant storage device **101** to the manufacturer of the external tamper-resistant storage device **103,** and a compliant card certificate issued by the manufacturer of the external tamper-resistant storage device **103** to the external tamper-resistant storage device **103** itself. Once the card certificate is verified, an object is created in step **S3.** To this end, in **S3,** the tamper-resistant storage device **101** sends the integrity key **101b** encrypted with the public key **103e** of the external tamper-resistant storage device **103.** Additionally, the tamper-resistant storage device also sends, in step **S3,** an identifier ID that uniquely identifies the object to be created, which also includes an identifier that is unique to the tamper-resistant storage device **101.** The unique identifier is also encrypted with the public key **103e** of the external tamper-resistant storage device **103.** It is important to note that the key pair **103e,103f** stored in the external tamper-resistant storage device **103** is used only for the purpose of this protocol. In step **S4,** the external tamper-resistant storage device **103** stores the unique identifier and integrity key along with the data to be protected, as indicated in Fig. 3 by **103a, 103b** and **103c.** The external tamper-resistant storage device **103** will use the integrity key **103c** in any subsequent read and write requests from the tamper-resistant storage device **101.**

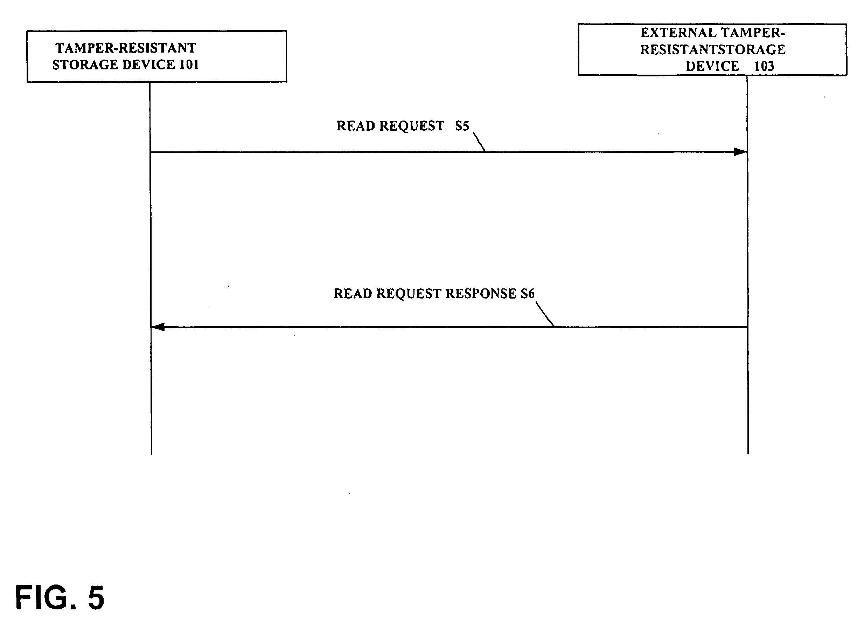

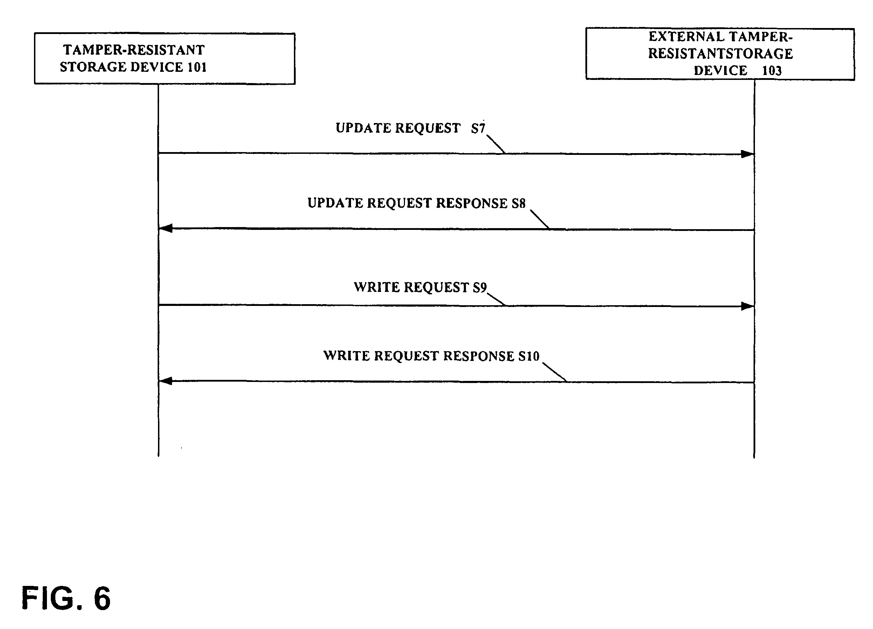

Figs. 5 & 6 illustrate the read and write protocol used for communication between the tamper-resistant storage device **101** and the external tamper-resistant storage device **103** in accordance with an embodiment of the invention. Fig. 5 illustrates the steps for the tamper-resistant storage device **101** reading data from the external tamper-resistant storage device **103.** In step **S5,** the tamper-resistant storage device **101** issues a challenge to the external tamper-resistant storage device **103.** In step **S6,** the external tamper-resistant storage device **103** responds to the challenge by the tamper-resistant storage device **101** by sending the data along with a message authentication code on the data to the tamper-resistant storage device **101.** The message authentication code is completed using a message authentication code function such as HMAC-MD5 with an integrity key **103c** as the key of the MAC function, and the object created in Fig. 4 as the input of the MAC function. Note that the original read request from the tamper-resistant storage device **101** can also be authenticated using a message authentication code if necessary. Moreover, the external tamper-resistant storage device **103** can also use a digital signature to authenticate the response to the read request by the tamper-resistant storage device **101.**

Fig. 6 illustrates the write or update request protocol between the tamper-resistant storage device **101** and the external tamper-resistant storage device **103** in accordance with an embodiment of the invention. In step **S7,** the tamper-resistant storage device **101** requests that the external tamper-resistant storage device **103** issues a challenge to the tamper-resistant storage device **101.** In step **S8,** the external tamper-resistant storage device **103** responds by sending a challenge to the tamper-resistant storage device **101.** In step **S9,** the tamper-resistant storage device **101** then sends a write request to the external tamper-resistant storage device **103** along with an authentication code and its own challenge. The authentication code is constructed using the integrity key **101b** and device identifier specific to the object to be created. In step **S9,** the external-tamper-resistant storage device **103** authenticates the write request sent by the tamper-resistant storage device **101** using the integrity key **103c** previously stored in the external tamper-resistant storage device during the creation protocol illustrated in Fig. 4. The external tamper-resistant storage device **103** also sends a response to the tamper-resistant storage device 101 indicating that the write request is allowed or disallowed.

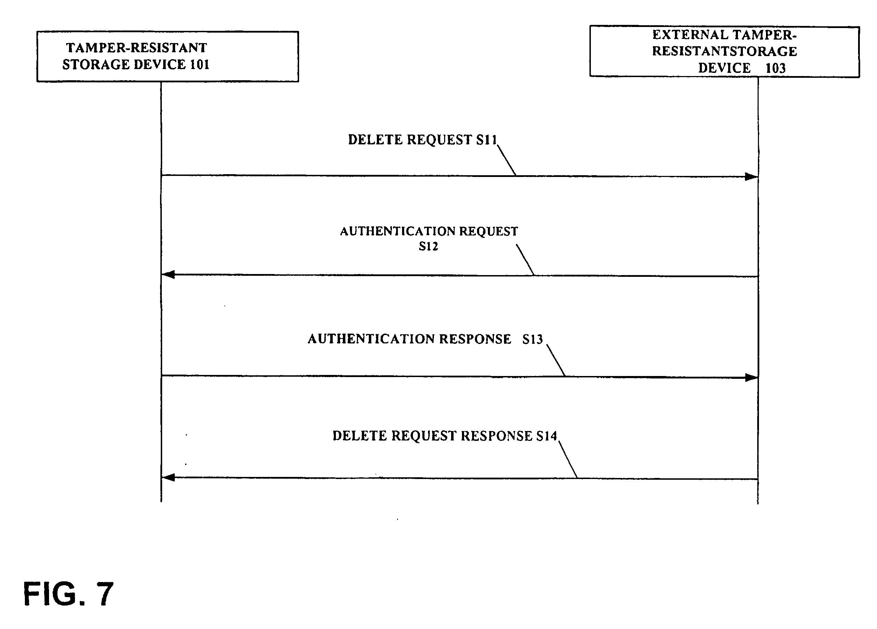

Fig. 7 is directed to another embodiment of the present invention. Specifically, Fig. 7 illustrates the use of a delete protocol. In step **S11,** the tamper-resistant storage device **101** issues a delete request to the external tamper-resistant storage device. In step **S12,** the external tamper-resistant storage device authenticates the request by issuing a challenge to the internal tamper-resistant storage device **101.** In **S13,** the external tamper-resistant storage device responds to the authentication request by sending the ID of the object to be deleted, and the MAC computed using the corresponding integrity key **103c.** The external tamper-resistant storage device **103** will perform the deletion and acknowledge the delete request in step **S14.** The response to the deletion request in step **S14** can also be authenticated using a MAC for a higher level of security.

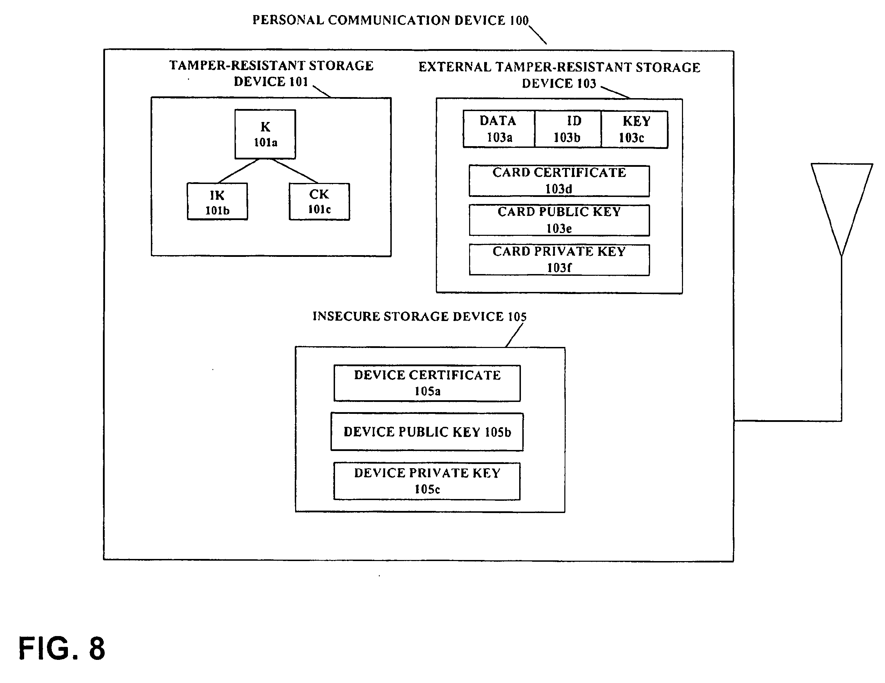

Fig. 8 illustrates a more detailed diagram of the personal communication device **100** as illustrated in Fig. 2 and in accordance with another embodiment of the present invention. In Fig. 8, the personal communication device **100** includes a tamper-resistant storage device **101,** an external tamper-resistant storage device **103** and an insecure storage device **105.** The tamper-resistant storage device **101** includes an integrity key **101b** and a confidentiality key **101c.** Both the integrity key **101b** and the confidentiality key **101c** can be determined independently or computed deterministically from a common underlying device key **101a.** As indicated in the previous embodiment, the integrity key **101b** and the confidentiality key **101c** are stored in the read-only, tamper-resistant storage device **101.** The external tamper-resistant storage device **103** is comprised of the same elements as described and indicated in Fig. 3. In other words, the external tamper-resistant storage device **103** is an electronic card such as a smartcard, flashcard or WIM card having read-write storage. The external tamper-resistant storage device **103** has an encryption key pair that consists of a device public key **103e** and a device private key **103f.** Additionally, the external tamper-resistant storage device includes a device certificate **103a** or compliance certificate that is evidence that the external tamper-resistant storage device **103** was manufactured by a trusted third party. The external tamper-resistant storage device **103** also has a memory location for storing protected data **103a,** device identification **103b** and a secret key **103c.** In this embodiment, the device identification **103b** and key **103c** are the ID and integrity key **102a** supplied by the tamper-resistant storage device **101.** The device ID and the key **102a** are used to authenticate read and update requests of data stored in the external tamper-resistant storage device **103.** Additionally, the card certificate **103d** stored in the external tamper-resistant storage device **103** is used by the storage tamper-resistant storage device **101** to assure that the external tamper-resistant storage device **103** is manufactured by a trusted third party.

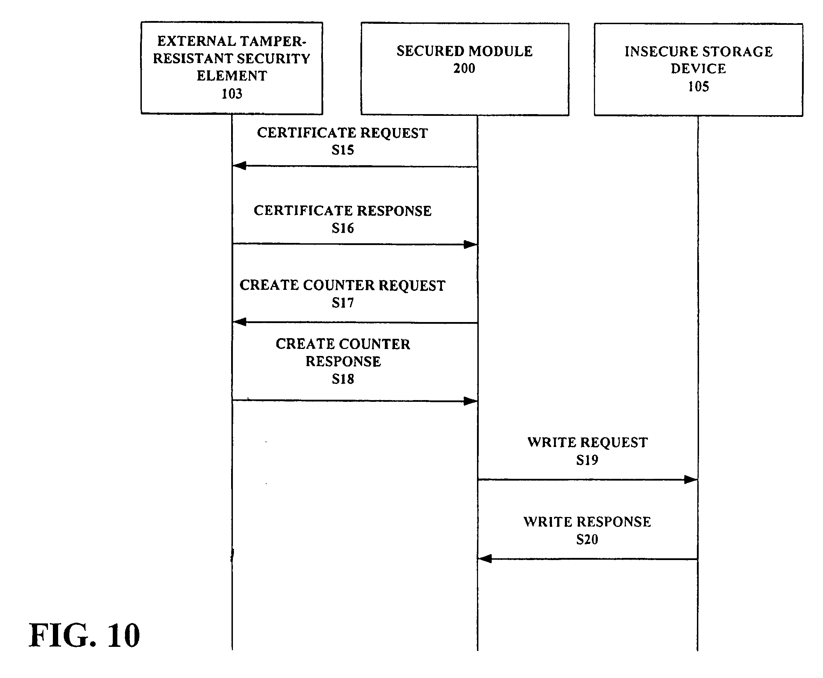

The personal communication device in Fig. 8 also includes an insecure storage device **105**. The insecure storage device can be external (i.e., an electronic card) or internal (i.e., hardwired) to the personal communication device **100.** The insecure storage device stores a device certificate **105a,** and a device key pair **105b, 105c.** In this embodiment of the present invention, the insecure storage device **105** is used to stored "state" data that is encrypted with the confidentiality key **101**c of the tamper-resistant storage device **101.** A corresponding integrity-protected checksum or counter, as described in the prior art, is stored in the external tamper-resistant storage device **103.** Communication between the insecure storage device **105,** the external tamper-resistant storage device **103** and the tamper-resistant storage device **101** is achieved using protocols, for example, as discussed in Figs. 10-12. This embodiment also allows different applications in the tamper-resistant storage device **101** to have different integrity keys. For example, an electronic purse application stored in the tamper-resistant storage device **101** may use key IK1 and a DRM application on the same device may use an integrity key IK2. The operating system of the tamper-resistant storage device will provide integrity-protected storage for IK1 and IK2 by encrypting them with the confidentiality key **101c** and storing them in a storage location of the insecure storage device **105.** This is possible because the external tamper-resistant storage device **103** does not attempt to authenticate the creator of the objects in any way. However, once an object is created and is associated with a key, all future requests to read, write or update the data will be authenticated by that key. This makes it possible to let different applications stored in the same device to used different keys. The only strict requirement is that the keys be stored in a tamper-resistant manner.

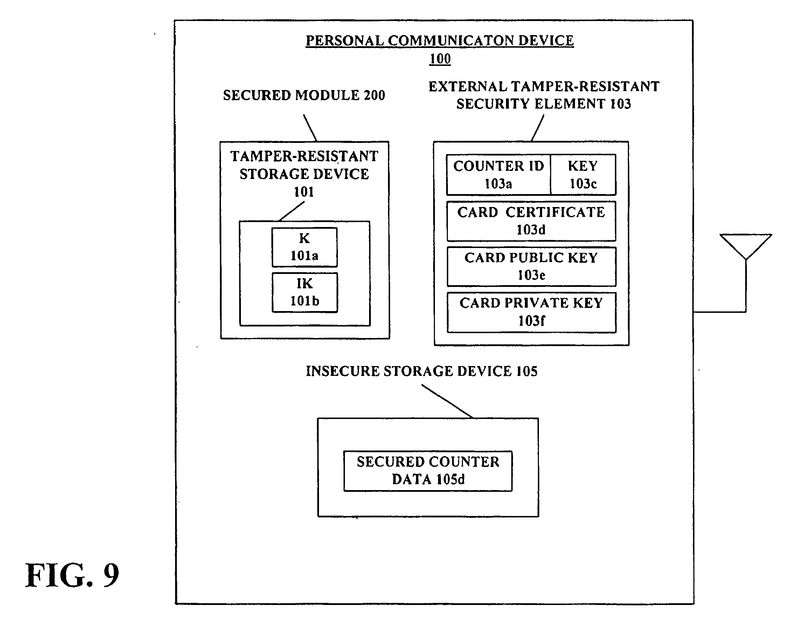

Fig. 9 illustrates the use of encryption by the secured module 200, and the external, tamper-resistant security element **103** to implement a trusted counter in accordance with an embodiment of the invention. The tamper-resistant storage device **101** has a secret key **101a** from which an integrity key **101c** can be derived. However, the integrity key **101b** can also be determined independently from the secret key **101a** as well. The personal communication device does not have any read-write storage, tamper-resistant or otherwise. In other words, the personal communication device 100 does not have any hardwired read-write memory. Thus, the only read-write storage would be provided by the external, tamper-resistant security element **103** and insecure storage device **105.**

The external, tamper-resistant security element **103** has an encryption key pair that consists of a card public key **103e** and a card private key **103f.** Additionally, the external tamper-resistant security element **103** includes a card certificate **103d** or compliance certificate that is used to prove that the external, tamper-resistant security element **103** was manufactured by a trusted third party. The external, tamper-resistant security element **103** has a memory location for storing a counterID **103a,** and a secret key 103c. In this embodiment, key **103c** is derived from the integrity key **101b** and is supplied by the tamper-resistant device **101.** The key **103c** is used to authenticate the response to read counter and update counter requests. It may also be used to authenticate the requests themselves. Additionally, the card public key **103e** stored in the external, tamper-resistant security element **103** is used by the secured module **200** to assure that the external, tamper-resistant security element **103** is manufactured by a trusted third party. The counter value and "state" information stored in the insecure storage device **105** are encrypted with a secret key **101 a** from the tamper-resistant storage device **101.**

Fig. 10-12 illustrates the steps for implementing a trusted counter in the personal communication device **100** through communication between the external, tamper-resistant security element **103** and insecure storage device **105.**

Fig. 10 illustrates the steps involved for executing the create protocol that is used for creating a counter value to be used by the personal communication device. Initially, in step **S15** secured module **200** requests the card certificate **103d** stored in the external, tamper-resistant security element **103.** In another embodiment of the invention, the card certificate **103d** itself is not stored in the device **103,** but a pointer such as an URL of the certificate is stored in the device. In step **S16** the external, tamper-resistant security element **103** sends a card certificate **103d,** which is verified by the secured module **200** as a compliant card using a certificate chain. In an embodiment where the pointer to the card certificate is stored in the device, the pointer to the card certificate is returned and the device **101** fetches the certificate **103d** from the location implied by the pointer. Two certificates can be used in order for the secured module **200** to verify that the external, tamper-resistant security element **103** possesses a compliant card certificate **103d.** For example, a certificate issued by the manufacturer of the tamper-resistant storage device **101** to the manufacturer of the external tamper-resistant security element **103,** and a compliant card certificate issued by the manufacturer of the external, tamper-resistant security element **103** to the external, tamper-resistant security element **103** itself. In step **S17,** the secured module **200** issues a create counter request to the external, tamper-resistant security element **103** and in **S18** the external, tamper-resistant security element 103 sends an counterID that uniquely identifies the current counter value. In step **S17,** module **200** also sends an integrity key encrypted with the public key **103e** to element **103.** Element **103** will store this integrity key as **103c.** In step **S19,** the secured module 200 receives the counter and computes an envelope by applying a suitable cryptographic transform (encryption, authentication or a combination), and writes the state value along with the counter value to the insecure storage device **105.** In step **S20,** the insecure storage device returns an acknowledgement of proper receipt of the state value or sends a message indicating that an error has occurred.

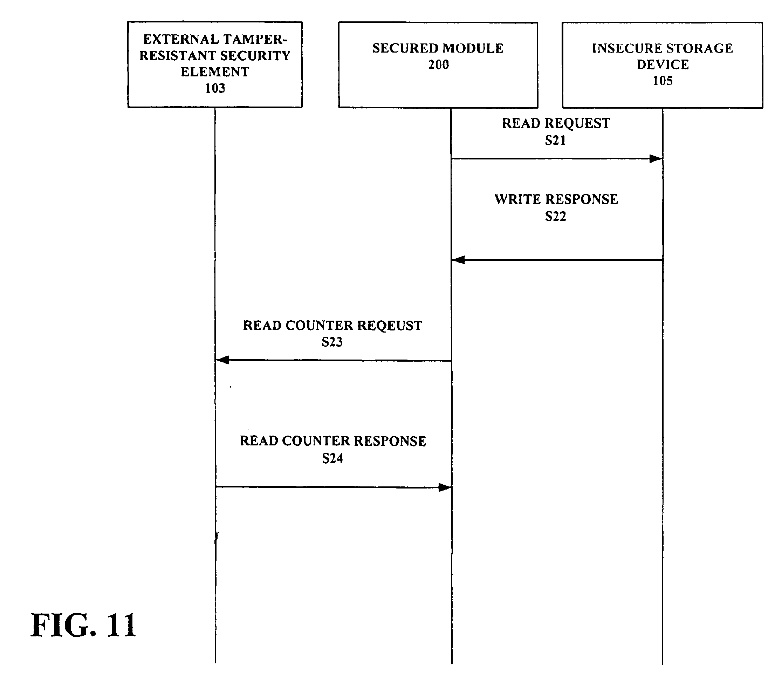

Fig. 11 illustrate the read protocol for implementing a trusted counter in accordance with an embodiment of the invention. In step **S21,** the tamper-resistant storage device issues a read request to the insecure storage device **105** for reading the state value. In step **S22,** the insecure storage device responds to the request by the returning raw data that is the envelope for the current state value. Before the secured module **200** can accept the data, the secured module **200** verifies that the envelope was formed correctly, and then extracts its contents. In order to accept the data as the current state value, the secured module **200** must check to see if the alleged counter value stored with this date is the same as the current counter value of the counterID stored in the external, tamper-resistant security element **103.** Specifically, in step **S23,** secured module **200** sends a read counter request along with a random challenge to the external, tamper-resistant security element **103** to read the counterID stored in the element **103.** The read request from the secured module **200** can be authenticated using an authorization token computed using the integrity key **101b,** if necessary. In step **S24,** the external, tamper-resistant security element **103** returns a token in response to the read request. The authorization token is completed using a message authentication code function such as HMAC-MD5 with the integrity key **103c** as the key of the MAC function, and the value of the counter, with the specified unique identifier countered, created in Fig. 10 as the input of the MAC function. Alternatively, the external, tamper-resistant security element 103 can use a digital signature to authenticate the response to the read request by the secured module **200.** The secured module **200** then checks to see if the stored counter values are equal. If so, the data is accepted as the current state information for the counter. In an embodiment where the digital signatures are used there is no need to exchange or store key **103c,** but read and update responses are authenticated by signing with key **103f.** Further in such an embodiment, the created envelope also includes the public key **103e,** which will be used by the device **100** to verify read and update responses.

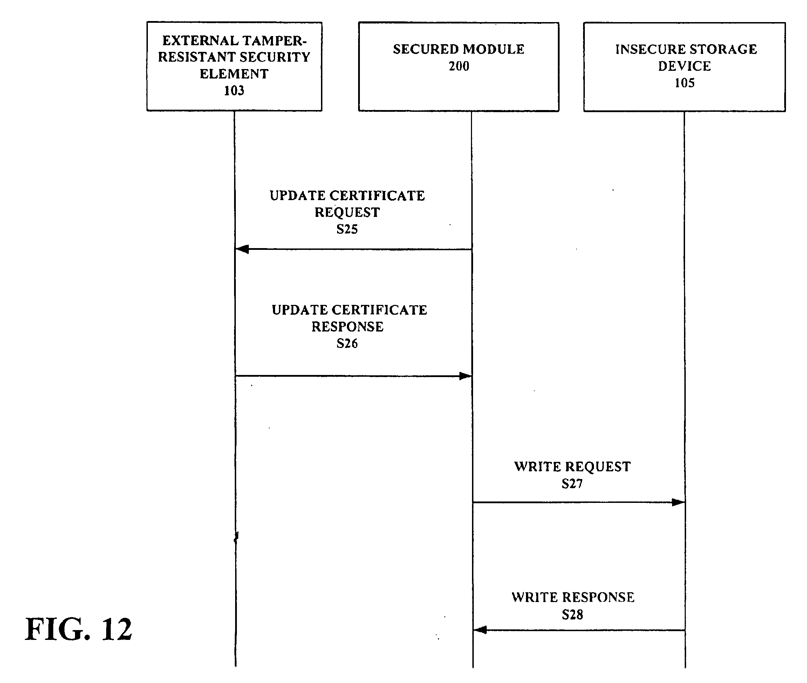

Fig. 12 illustrates an update request protocol between the secured module **200,** the external, tamper-resistant security element **103** and the insecure storage device **105** for implementing a trusted counter in accordance with an embodiment of the invention. In step **S25,** the secured module **200** has computed a new or a change in state information of the counter and requests that the external, tamper-resistant security element **103** update the counter value using the counterID. The request is also sent along with a challenge. In step **S26,** the external, tamper-resistant security element **103** responds by updating the counter and returns the updated state information for the counter along with an authorization token. The authentication token is constructed using the integrity key **103c** and counterID specific to the new counter value to be created.

In step **S27,** the secured module **200** verifies the authorization token, forms a new envelope for the new state value along with the new counter value and then writes the envelope to the insecure storage device **105.** In step **S28,** the insecure storage device responds to the write request by the tamper-resistant storage device by indicating that the write request is successful or not successful.

As another alternative for this embodiment, the basic scheme of the system can be used on existing smartcard presently used by a personal communication device. This is because some existing smartcards support a tamper-resistant counter. Using the present invention, the counter value could be stored in the insecure storage device 105 encrypted with a confidentiality key 101c. However, this would entail the following modifications.

The object creation would write the object to the insecure storage device 105, and initialize the counter in the external tamper-resistant storage device 103. The object update will update the object on the insecure storage device 105, and increment the counter on the external tamper-resistant storage device 103. This embodiment can be implemented on smartcards that have signature capability and protect files using PINS by using the PIN code instead of a key and a MAC.

Although illustrative embodiments have been described herein in detail, its should be noted and understood that the descriptions and drawings have been provided for purposes of illustration only and that other variations both in form and detail can be added thereupon without departing from the scope of the invention. The terms and expressions have been used as terms of description and not terms of limitation. There is no limitation to use the terms or expressions to exclude any equivalents of features shown and described or portions thereof.

## Claims

1. A method for implementing a trusted counter in a personal communication device (100), the personal communication device comprising a first storage device (101) within a secure module (200) and comprising no read-write storage, the first storage device being a read-only, tamper-resistant storage device, the method comprising:
the secure module authenticating a second storage device (103), the second storage device being an external read-write, tamper-resistant storage device;
the secure module issuing a create counter request to the second storage device;
the secure module receiving a unique ID identifying a current counter value from the second storage device;
the secure module computing an encrypted envelope of the unique ID by applying a cryptographic transform to the unique ID; and
the secure module writing a state value and the encrypted envelope of the unique ID to a third storage device, the third storage device (105) being a an external read-write, insecure storage device.

2. The method of claim 1, wherein said state value and said counter value include a number of failed attempts to correctly enter a PIN to access said personal communication device.

3. The method of claim1 or claim 2, wherein authenticating of said second storage device further comprises:
the secure module receiving a certificate and a public key from the second storage device; and
the secure module verifying the authenticity of the certificate.

4. The method of any of claims 1 to 3 further comprising the secure module receiving from said third storage device a success or failure indication in relation to the writing of the state value and encrypted envelope.

5. A computer program comprising machine-executable instructions for performing the method of any of claims 1 to 4.

6. A system for implementing a trusted counter in a personal communication device (100) comprising no read-write storage, comprising:
a secure module (200) in the personal communication device comprising a first storage device (101), the first storage device being a read-only, tamper-resistant storage device;
a second storage device (103), the second storage device being an external read-write, tamper-resistant storage device;
a third storage device (105), the third storage device being an external read-write, insecure storage device; and
a processor (210), in communication with the secure module, the second and the third storage devices, configured to:
execute authentication of the second storage device by the secure module;
issue a create counter request from the secure module to the second storage device;
send from the second storage device to the secure module a unique ID identifying a current counter value;
compute an encrypted envelope of the unique ID with the secure module by applying a cryptographic transform to the unique ID; and
write a state value and the encrypted envelope of the unique ID to said third storage device.

7. The system of claim 6, wherein the state value and the counter value include a number of failed attempts to correctly enter a PIN to gain access said personal communication device.

8. The system of claim 6 or claim 7, wherein said second storage device and said third storage devices are in a removable electronic card that is received by said personal communication device.

9. The system of any of claims 6 to 8, wherein the communication between said processor and said secure module, second storage device and third storage device comprises the execution of a plurality of protocols using an operating system of the personal communication device.

10. The system of claim 9, wherein said plurality of protocols are comprised of a create protocol, a read protocol, and an update protocol.

## Patentansprüche

1. Verfahren zum Implementieren eines vertrauenswürdigen Zählers in einem persönlichen Kommunikationsgerät (100), wobei das persönliche Kommunikationsgerät ein erstes Speichergerät (101) in einem sicheren Modul (200) umfasst und keinen Lese-Schreib-Speicher umfasst, wobei das erste Speichergerät ein gegen Eingriffe geschütztes Nur-Lese-Speichergerät ist, das Verfahren umfasst:
das sichere Modul authentifiziert ein zweites Speichergerät (103), wobei das zweite Speichergerät ein externes gegen Eingriffe geschütztes Lese-Schreib-Speichergerät ist;
das sichere Modul gibt eine Zähler-Erstellen-Anfrage an das zweite Speichergerät aus;
das sichere Modul empfängt eine eindeutige ID vom zweiten Speichergerät, die einen aktuellen Zählerwert angibt;
das sichere Modul berechnet einen verschlüsselten Umschlag der eindeutigen ID durch Anwenden einer kryptografischen Transformation auf die eindeutige ID; und
das sichere Modul schreibt einen Zustandswert und den verschlüsselten Umschlag der eindeutigen ID auf ein drittes Speichergerät, wobei das dritte Speichergerät (105) ein externes unsicheres Lese-Schreib-Speichergerät ist.

2. Verfahren nach Anspruch 1, wobei der Zustandswert und der Zählerwert eine Anzahl fehlgeschlagener Versuche enthält, eine PIN zum Zugriff auf das persönliche Kommunikationsgerät korrekt einzugeben.

3. Verfahren nach Anspruch 1 oder Anspruch 2, wobei Authentifizieren des zweiten Speichergeräts weiterhin umfasst:
das sichere Modul empfängt ein Zertifikat und einen öffentlichen Verschlüssel von dem zweiten Speichergerät; und
das sichere Modul verifiziert die Authentizität des Zertifikats.

4. Verfahren nach jedem der Ansprüche 1 bis 3, weiterhin umfassend, dass das sichere Modul von dem dritten Speichergerät eine Erfolgs- oder Fehleranzeige bezüglich des Schreibens des Zustandswerts und verschlüsselten Umschlags empfängt.

5. Computerprogramm, das maschinenlesbare Befehle zum Durchführen des Verfahrens gemäß jedem der Ansprüche 1 bis 4 umfasst.

6. System zum Implementieren eines vertrauenswürdigen Zählers in einem persönlichen Kommunikationsgerät (100), das keinen Lese-Schreib-Speicher umfasst, umfassend:
ein sicheres Modul (200) in dem persönlichen Kommunikationsgerät umfassend ein erstes Speichergerät (101), wobei das erste Speichergerät ein gegen Eingriffe geschütztes Nur-Lese-Speichergerät ist;
ein zweites Speichergerät (103), wobei das zweite Speichergerät ein externes gegen Eingriffe geschütztes Lese-Schreib-Speichergerät ist;
ein drittes Speichergerät (105), wobei das dritte Speichergerät ein externes unsicheres Lese-Schreib-Speichergerät ist; und
einen Prozessor (210), in Kommunikation mit dem sicheren Modul, dem zweiten und dem Speichergerät, konfiguriert zum
Ausführen einer Authentifizierung des zweiten Speichergeräts durch das sichere Modul;
Ausgeben einer Zähler-Erstellen-Anfrage von dem sicheren Modul an das zweite Speichergerät;
Senden einer eindeutigen ID von dem zweiten Speichergerät an das sichere Modul, die einen aktuellen Zählerwert angibt;
Berechnen eines verschlüsselten Umschlags der eindeutigen ID mit dem sicheren Modul durch Anwenden einer kryptografischen Transformation auf die eindeutige ID; und
Schreiben eines Zustandswerts und des verschlüsselten Umschlags der eindeutigen ID auf das dritte Speichergerät.

7. System nach Anspruch 6, wobei der Zustandswert und der Zählerwert eine Anzahl fehlgeschlagener Versuche enthält, eine PIN zum Erlangen von Zugriff auf das persönliche Kommunikationsgerät korrekt einzugeben.

8. System nach Anspruch 6 oder Anspruch 7, wobei das zweite Speichergerät und das dritte Speichergerät in einer entfernbaren elektronischen Karte sind, die von dem persönlichen Kommunikationsgerät empfangen wird.

9. System nach jedem der Ansprüche 6 bis 8, wobei die Kommunikation zwischen dem Prozessor und dem sicheren Modul, zweiten Speichergerät und dritten Speichergerät das Ausführen mehrerer Protokolle mittels des Betriebssystems des persönlichen Kommunikationsgeräts umfasst.

10. System nach Anspruch 9, wobei die mehreren Protokolle ein Erstellungsprotokoll, ein Leseprotokoll und ein Aktualisierungsprotokoll umfassen.

## Revendications

1. Procédé destiné à mettre en oeuvre un compteur sécurisé dans un dispositif de communications personnelles (100), le dispositif de communications personnelles comprenant un premier dispositif de stockage (101) dans un module sécurisé (200) et ne comprenant pas de mémoire de stockage en lecture/écriture, le premier dispositif de stockage étant un dispositif de stockage en lecture seule résistant aux altérations, le procédé comprenant les étapes ci-dessous dans lesquelles :
le module sécurisé authentifie un deuxième dispositif de stockage (103), le deuxième dispositif de stockage étant un dispositif de stockage externe en lecture/écriture résistant aux altérations ;
le module sécurisé émet une demande de création de compteur à destination du deuxième dispositif de stockage ;
le module sécurisé reçoit un identifiant unique identifiant une valeur de compteur en cours en provenance du deuxième dispositif de stockage ;
le module sécurisé calcule une enveloppe chiffrée de l'identifiant unique en appliquant une transformation cryptographique à l'identifiant unique ; et
le module sécurisé écrit une valeur d'état et l'enveloppe chiffrée de l'identifiant unique dans un troisième dispositif de stockage, le troisième dispositif de stockage (105) étant un dispositif de stockage en lecture/écriture externe non sécurisé.

2. Procédé selon la revendication 1, dans lequel ladite valeur d'état et ladite valeur de compteur comprennent un nombre de tentatives infructueuses pour saisir correctement un code PIN en vue d'accéder audit dispositif de communications personnelles.

3. Procédé selon la revendication 1 ou 2, dans lequel l'authentification dudit deuxième dispositif de stockage comprend en outre les étapes ci-dessous dans lesquelles :
le module sécurisé reçoit un certificat et une clé publique en provenance du deuxième dispositif de stockage ; et
le module sécurisé vérifie l'authenticité du certificat.

4. Procédé selon l'une quelconque des revendications 1 à 3, comprenant en outre une étape dans laquelle le module sécurisé reçoit en provenance dudit troisième dispositif de stockage une indication de succès ou d'échec par rapport à l'écriture de la valeur d'état et de l'enveloppe chiffrée.

5. Programme informatique comprenant des instructions exécutables par une machine en vue de mettre en oeuvre le procédé selon l'une quelconque des revendications 1 à 4.

6. Système destiné à mettre en oeuvre un compteur sécurisé dans un dispositif de communications personnelles (100) ne comportant pas de mémoire de stockage en lecture/écriture, comprenant :
un module sécurisé (200) dans le dispositif de communications personnelles comprenant un premier dispositif de stockage (101), le premier dispositif de stockage étant un dispositif de stockage en lecture seule résistant aux altérations ;
un deuxième dispositif de stockage (103), le deuxième dispositif de stockage étant un dispositif de stockage externe en lecture/écriture résistant aux altérations ;
un troisième dispositif de stockage (105), le troisième dispositif de stockage étant un dispositif de stockage externe en lecture/écriture non sécurisé ; et
un processeur (210), en communication avec le module sécurisé et les deuxième et troisième dispositifs de stockage, configuré de manière à :
exécuter l'authentification du deuxième dispositif de stockage par le biais du module sécurisé ;
émettre une demande de création de compteur, du module sécurisé au deuxième dispositif de stockage ;
envoyer, du deuxième dispositif de stockage au module sécurisé, un identifiant unique identifiant une valeur de compteur en cours ;
calculer une enveloppe chiffrée de l'identifiant unique avec le module sécurisé en appliquant une transformation cryptographique à l'identifiant unique ; et
écrire une valeur d'état et l'enveloppe chiffrée de l'identifiant unique dans ledit troisième dispositif de stockage.

7. Système de la revendication 6, dans lequel la valeur d'état et la valeur de compteur comprennent un nombre de tentatives infructueuses visant à saisir correctement un code PIN en vue d'accéder audit dispositif de communications personnelles.

8. Système selon la revendication 6 ou 7, dans lequel ledit deuxième dispositif de stockage et ledit troisième dispositif de stockage sont sur une carte électronique amovible qui est reçue par ledit dispositif de communications personnelles.

9. Système selon l'une quelconque des revendications 6 à 8, dans lequel la communication entre ledit processeur et ledit module sécurisé, le deuxième dispositif de stockage et le troisième dispositif de stockage, comprend l'exécution d'une pluralité de protocoles utilisant un système d'exploitation du dispositif de communications personnelles.

10. Système selon la revendication 9, dans lequel ladite pluralité de protocoles comporte un protocole de création, un protocole de lecture, et un protocole de mise à jour.
